# EUROPEAN PATENT APPLICATION

(11) **EP 1 792 792 A2**
(43) Date of publication of application: **06.06.2007**
(21) Application number: 06024855.6
(22) Date of filing: 30.11.2006
(51) Int. Cl.: B60R 22/44

(54) **Webbing take-up device**

(30) Priority: 30.11.2005 JP 2005345620
(71) Applicant: KABUSHIKI KAISHA TOKAI-RIKA-DENKI-SEISAKUSHO, Niwa-gun, Aichi-ken 480-0195 (JP)
(72) Inventor: Seiji, Hori, Haruhi-cho Nishikasugai-gun Aichi-ken (JP)
(74) Representative: Goddar, Heinz J.

(57) **Abstract**

To obtain a webbing take-up device where a pretensioner mechanism and a lock mechanism may both be disposed on one end side of a spool and where the deformation load of an energy absorbing member may be set regardless of the take-up load of a webbing by the pretensioner mechanism. In a webbing take-up device 10, a pretensioner mechanism 56 and a lock mechanism 82 are both disposed on one axial-direction end side of a spool 18, and rotational force of a spool 134 of the pretensioner mechanism 56 is directly transmitted to the spool 18 via a slide pin 138 (i.e., is transmitted to the spool 18 not via a torsion bar 24). Thus, the deformation load of the torsion bar 24 may be set regardless of the take-up load of a webbing 20 by the pretensioner mechanism 56.

## Description

### Cross-Reference to Related Application

This application claims priority under 35 USC 119 from Japanese Patent Application No. 2005-345620, the disclosure of which is incorporated by reference herein.

### BACKGROUND

### Technical Field

The present invention relates to a webbing take-up device that configures a vehicular seat belt device.

### Related Art

As disclosed in Japanese Patent Application Laid-open No. 2005-178415, for example, a webbing take-up device is known which includes: a cylindrical spool onto which a webbing is taken up; a torsion bar (energy absorbing member) that is housed inside the spool, with one axial-direction end portion of the torsion bar being disposed on one axial-direction end side of the spool and the other axial-direction end portion of the torsion bar being coupled to the other axial-direction end portion of the spool; a lock gear that is attached, so as to be incapable of relative rotation, to the one axial-direction end portion of the torsion bar; a pretensioner mechanism that is capable of rotating the lock gear in a webbing take-up direction; and a lock mechanism that is capable of inhibiting rotation of the lock gear in a webbing pullout direction.

Because this webbing take-up device has a configuration where the pretensioner mechanism and the lock mechanism are both disposed on the one axial-direction end side of the spool, another mechanism may be added to the other axial-direction end side of the spool.

However, because this webbing take-up device has a configuration where the drive force of the pretensioner mechanism is transmitted to the spool via the torsion bar, the deformation load of the torsion bar cannot be set lower than the take-up load of the webbing by the pretensioner mechanism.

### SUMMARY

The present invention provides a webbing take-up device where both the pretensioner mechanism and the lock mechanism may be disposed on one end side of the spool and where the deformation load of the energy absorbing member may be set regardless of the take-up load of the webbing by the pretensioner mechanism.

A webbing take-up device of a first aspect of the invention provides a webbing take-up device comprising a spool that includes an outer peripheral portion onto which a webbing for restraining a passenger is taken up; a torsionally deformable energy absorbing member that is housed inside the spool, with one end portion of the energy absorbing member being disposed on one end side of the spool and another end portion of the energy absorbing member being coupled to the other end side of the spool; a lock mechanism that is disposed on the one end side of the spool and inhibits rotation of the one end portion of the energy absorbing member in a webbing pullout direction when actuated; and a pretensioner mechanism that comprises a rotating member rotatably supported on the one end portion of the energy absorbing member, a drive source capable of rotating the rotating member in a webbing take-up direction, and a coupling member that couples together the rotating member and the spool at least when the rotating member rotates in the webbing take-up direction and which releases the coupling together of the rotating member and the spool when the energy absorbing member is torsionally deformed.

According to this aspect, when the rotating member is rotated in the webbing take-up direction by the drive source of the pretensioner mechanism, the rotational force is transmitted to the spool via the coupling member, and the spool is rotated in the webbing take-up direction. Further, when the lock mechanism is actuated, rotation of the one end portion of the energy absorbing member in the webbing pullout direction is inhibited, and rotation of the spool in the webbing pullout direction is inhibited. In this state, when a load equal to or greater than a predetermined value acts on the spool from the passenger via the webbing, the energy absorbing member is torsionally deformed, and the coupling together of the rotating member and the spool by the coupling member is released. For this reason, the spool rotates in the webbing pullout direction independent of the rotating member, and the webbing is pulled out. Thus, the load (energy) acting on the passenger is absorbed.

In this webbing take-up device, the pretensioner mechanism and the lock mechanism are both disposed on the one end side of the spool , but because the rotating member and the spool are coupled together by the coupling member when the drive source of the pretensioner mechanism is actuated, that is, when the rotating member rotates in the webbing take-up direction, the rotational force of the rotating member is directly transmitted to the spool via the coupling member and not via the energy absorbing member. Consequently, the deformation load of the energy absorbing member may be set regardless of the take-up load of the webbing by the pretensioner mechanism.

In this aspect, the coupling member may be disposed between, so as to bridge, the rotating member and the spool and may be displaced by relative rotation between the spool and the one end portion of the energy absorbing member such that the coupling together of the rotating member and the spool is released.

According to this aspect, when the spool and the one end portion of the energy absorbing member relatively rotate, the coupling member bridging the rotating member and the spool is displaced, and the coupling together of the rotating member and the spool is released.

In this aspect, at least one of the spool or the energy absorbing member may include a breaking portion that is disposed between, so as to bridge, the spool and the one end portion of the energy absorbing member to couple together the spool and the one end portion of the energy absorbing member, and is broken when the energy absorbing member is torsionally deformed.

According to this aspect, because relative rotation between the spool and the one end portion of the energy absorbing member is regulated by the breaking portion, rotation of the spool in the webbing pullout direction may be reliably restricted when rotation of the one end portion of the energy absorbing member in the webbing pullout direction is inhibited by the lock mechanism, and the coupling member may be prevented from being unnecessarily displaced. Further, because the breaking portion is broken when the energy absorbing member is torsionally deformed, relative rotation between the spool and the one end portion of the energy absorbing member, that is, displacement of the coupling member is enabled.

In this aspect, the webbing take-up device may further comprise a relative rotation regulating member that is disposed between, so as to bridge, the rotating member and the one end portion of the energy absorbing member couple together both the rotating member and the one end portion of the energy absorbing member, and is displaced by relative rotation between the rotating member and the one end portion of the energy absorbing member, and to release the coupling together of the rotating member and the one end portion of the energy absorbing member, wherein the coupling member couples together the rotating member and the spool when the rotating member and the one end portion of the energy absorbing member relatively rotate.

According to this aspect, because relative rotation between the spool and the one end portion of the energy absorbing member is regulated by the relative rotation regulating member, rotation of the spool in the webbing pullout direction may be reliably restricted when rotation of the one end portion of the energy absorbing member in the webbing pullout direction is inhibited by the lock mechanism. On the other hand, when the rotating member is rotated in the webbing take-up direction by the drive source and the rotating member and the one end portion of the energy absorbing member relatively rotate, the coupling together of the spool and the one end portion of the energy absorbing member by the relative rotation regulating member is released, and the rotating member and the spool are coupled together by the coupling member. Thus, the rotational force of the rotating member is transmitted to the spool via the coupling member.

In this aspect, at least one of the rotating member and the energy absorbing member may include a breaking portion that is disposed between, so as to bridge, the rotating member and the one end portion of the energy absorbing member to couple together the rotating member and the one end portion of the energy absorbing member, and is broken when the rotating member rotates.

According to this aspect, because relative rotation between the rotating member and the one end portion of the energy absorbing member is regulated by the breaking portion, the relative rotation regulating member may be prevented from being unnecessarily displaced. Further, because the breaking portion breaks when the rotating member is rotated by the drive source, relative rotation between the rotating member and the one end portion of the energy absorbing member is allowed, and displacement of the relative rotation regulating member is enabled.

In this aspect, relative rotation between the spool and the one end portion of the energy absorbing member may occur by torsional deformation of the energy absorbing member.

According to this aspect, when the spool and the one end portion of the energy absorbing member relatively rotate as a result of the energy absorbing member being torsionally deformed, the coupling member bridging the rotating member and the spool is displaced, and the coupling together of the rotating member and the spool is released.

As described above, in the webbing take-up device pertaining to the present invention, the pretensioner mechanism and the lock mechanism may both be disposed on one end side of the spool, and the deformation load of the torsion bar may be set regardless of the take-up load of the webbing by the pretensioner mechanism.

### BRIEF DESCRIPTION OF THE DRAWINGS

Exemplary embodiments of the present invention will be described in detail based on the following figures, wherein:
FIG. 1 is an exploded perspective view showing the configuration of a webbing take-up device pertaining to a first exemplary embodiment of the present invention;
FIG. 2 is a cross-sectional view showing the configuration of relevant portions of the webbing take-up device pertaining to the first exemplary embodiment of the present invention;
FIG. 3 is an exploded perspective view showing the configuration of peripheral members including a spool and a sleeve of the webbing take-up device pertaining to the first exemplary embodiment of the present invention;
FIG. 4 is a cross-sectional view showing the configuration of peripheral members including the spool and the sleeve of the webbing take-up device pertaining to the first exemplary embodiment of the present invention;
FIG. 5 is a plan view showing a partial configuration of a slide pin and a lock gear of the webbing take-up device pertaining to the first exemplary embodiment of the present invention;
FIG. 6 is a cross-sectional view along line 3-3 of FIG. 4;
FIG. 7 is a cross-sectional view corresponding to FIG. 6 showing a state where a rotational force transmitting member is displaced;
FIG. 8 is a cross-sectional view showing the configuration of peripheral members including a spool and a sleeve of a webbing take-up device pertaining to a second exemplary embodiment of the present invention;

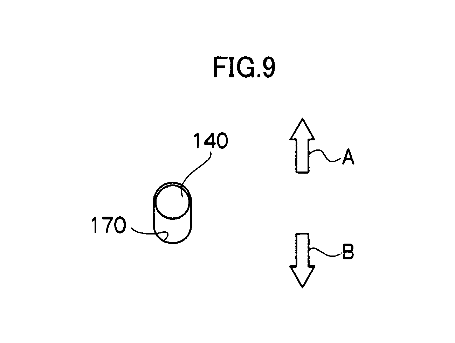

FIG. 9 is a plan view showing a partial configuration of the sleeve and a slide pin of the webbing take-up device pertaining to the second exemplary embodiment of the present invention;
FIG. 10A is a cross-sectional view along line 5-5 of FIG. 8, and FIG. 10B is a cross-sectional view along line 7-7 of FIG. 8; and
FIG. 11A is a cross-sectional view corresponding to FIG. 10A showing a state where a breaking portion is broken, and FIG. 11B is a cross-sectional view corresponding to FIG. 10B showing a state where a first rotational force transmitting member is displaced.

### DESCRIPTION

### First Exemplary Embodiment

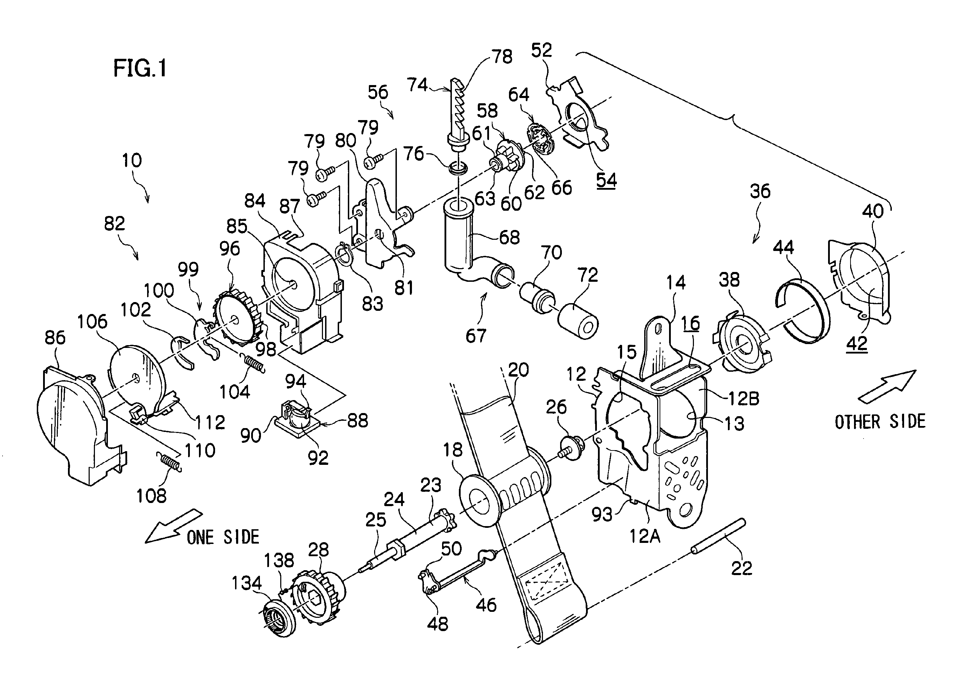

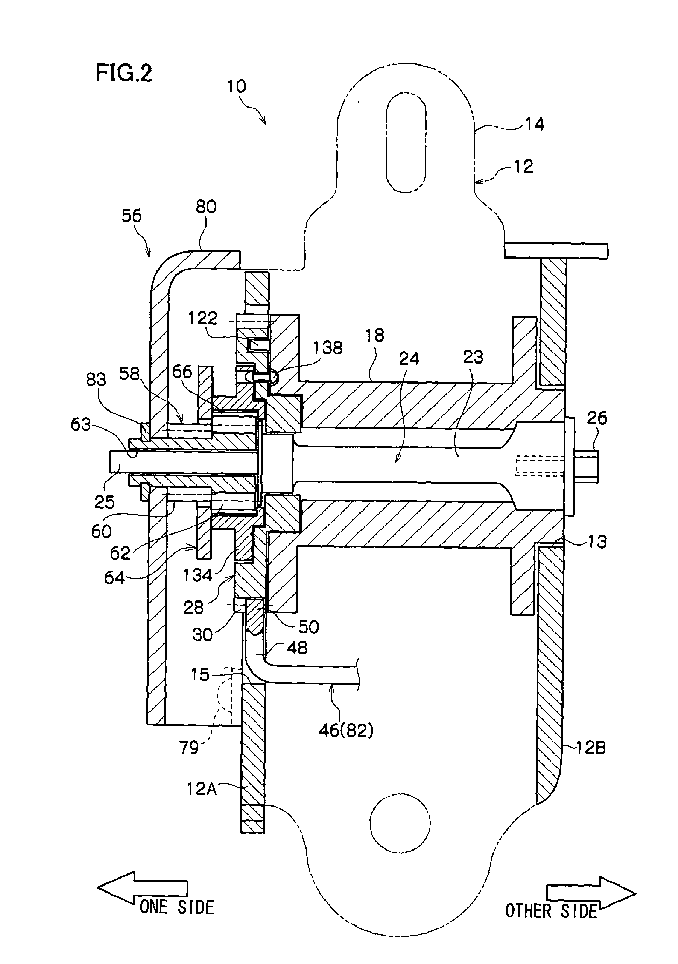

In FIG. 1, a webbing take-up device 10 pertaining to a first exemplary embodiment of the present invention is shown in an exploded perspective view. In FIG. 2, the configuration of the webbing take-up device 10 is shown in a cross-sectional view. It will be noted that, in FIG. 2, illustration of some configural members is omitted for convenience of description. Additionally, in some of the figures, the directions with respect to the webbing take-up device 10 is described as one side and the other side both are indicated as an arrow respectively.

The webbing take-up device 10 is disposed with a plate-like frame 12, which is substantially U-shaped when seen from above, and the frame 12 is fixed inside a vehicle interior. A coupling piece 14 is disposed between, so as to bridge, one side wall 12A and other side wall 12B of the frame 12. The coupling piece 14 is fixed inside the vehicle interior, and an insertion hole 16 is formed in the coupling piece 14. A substantially circular through hole 15 is formed in the one side wall 12A of the frame 12, and a circular through hole 13 is formed in the other side wall 12B.

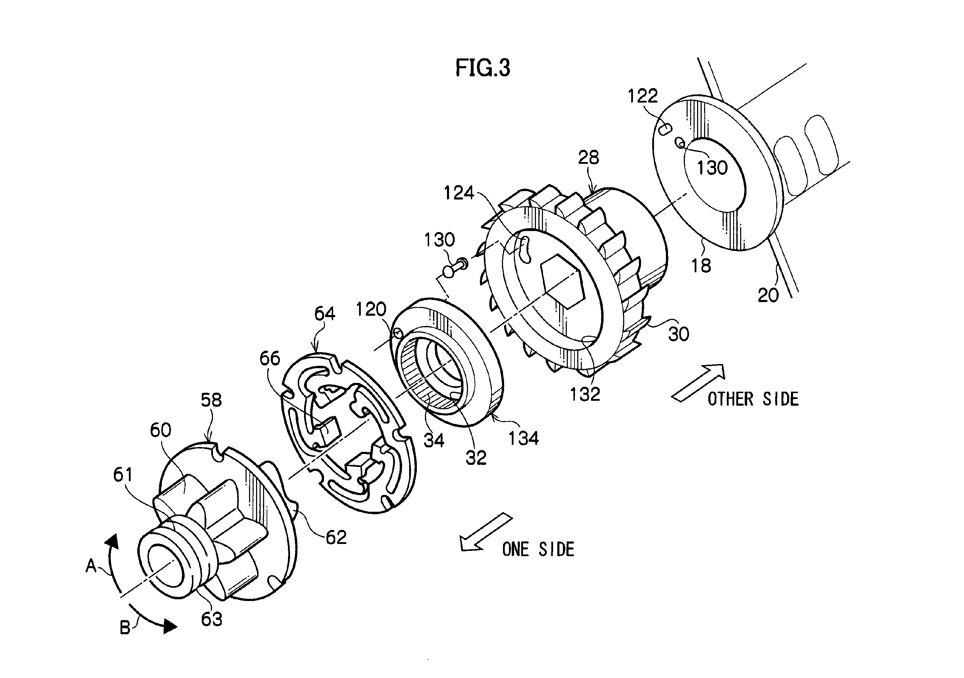

A circular cylinder-shaped spool 18 serving as a take-up shaft is supported, so as to be freely rotatable, between the one side wall 12A and the other side wall 12B of the frame 12. A proximal end portion of a long band-like webbing 20 for restraining a passenger is locked to the spool 18 by a circular column-shaped shaft 22. When the spool 18 is rotated in one direction about its axis (this direction will be called the "take-up direction" below; see arrow A in FIG. 3), the webbing 20 is taken up from its proximal end side onto the outer peripheral portion of the spool 18. When the webbing 20 is pulled from its distal end side, the webbing 20 is pulled out while the spool 18 rotates (the rotational direction of the spool 18 when the webbing 20 is pulled out will be called the "pullout direction" below; see arrow B in FIG. 3).

A torsion bar 24 that configures an energy absorbing member of a force limiter mechanism is disposed inside (in the axial center portion of) the spool 18. The torsion bar 24 is formed by a metal material such as steel and includes a torsion deformation portion 23, which is torsionally deformable when a torsional load equal to or greater than a predetermined value is applied thereto, and a spindle portion 25, which is disposed coaxially and integrally with one axial-direction end portion (in FIG. 2, the left end portion) of the torsion deformation portion 23. The spindle portion 25 penetrates, without contacting, the through hole 15 in the one side wall 12A and protrudes outward (one side) of the frame 12.

A screw member 26 is screwed into the other axial-direction end portion (in FIG. 2, the right end portion) of the torsion deformation portion 23, and the other axial-direction end portion of the torsion deformation portion 23 and the other axial-direction end portion (in FIG. 2, the right end portion) of the spool 18 are integrally coupled together by the screw member 26. Thus, the torsion bar 24 rotates integrally with the spool 18.

A lock gear 28 that configures the energy absorbing member of the force limiter mechanism is disposed on the one axial-direction side (in FIG. 2, the left side) of the spool 18. The lock gear 28 is disposed inside the through hole 15 in the one side wall 12A and is locked to the one axial-direction end portion of the torsion deformation portion 23. The lock gear 28 rotates integrally with the torsion bar 24 and the spool 18 other than when the torsion deformation portion 23 is torsionally deformed. As shown in FIG. 3, ratchet teeth 30 are formed on the outer periphery of the lock gear 28.

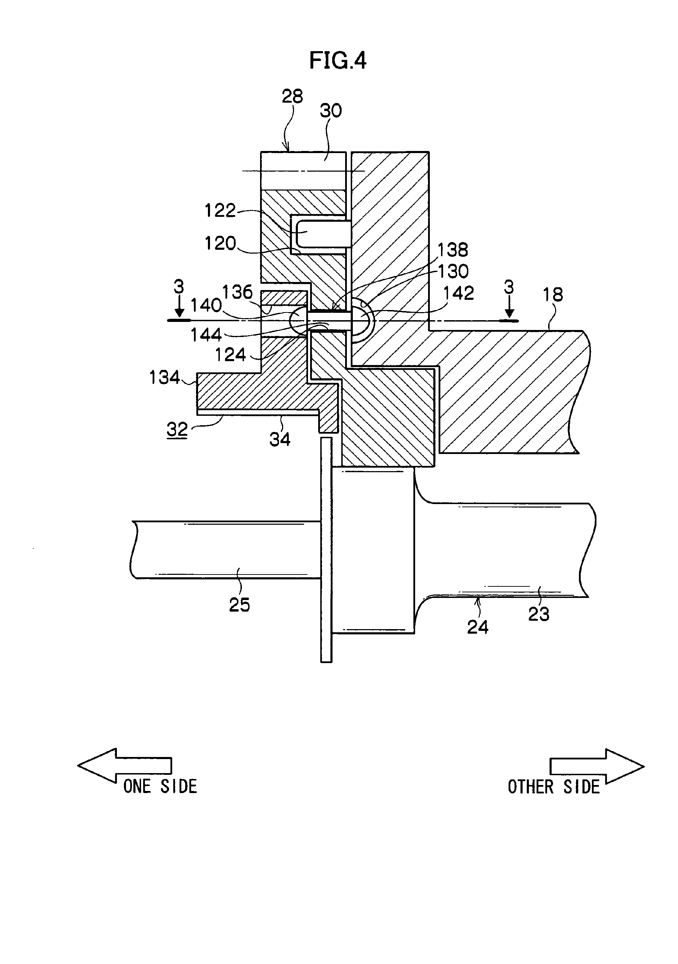

As shown in FIG. 4, a circular shear pin insertion hole 120 that opens to the other side of the lock gear 28 is formed in the outer peripheral portion of the lock gear 28. A circular column-shaped shear pin 122 serving as a breaking portion that protrudes from the one axial-direction end portion of the spool 18 is inserted into the shear pin insertion hole 120. The shear pin 122 couples together the spool 18 and the lock gear 28 and regulates the relative rotation of both, but when torque equal to or greater than a predetermined value acts between the spool 18 and the lock gear 28 and the torsion deformation portion 23 of the torsion bar 24 is torsionally deformed, the shear pin 122 breaks (shears) and releases the coupling together of the spool 18 and the lock gear 28.

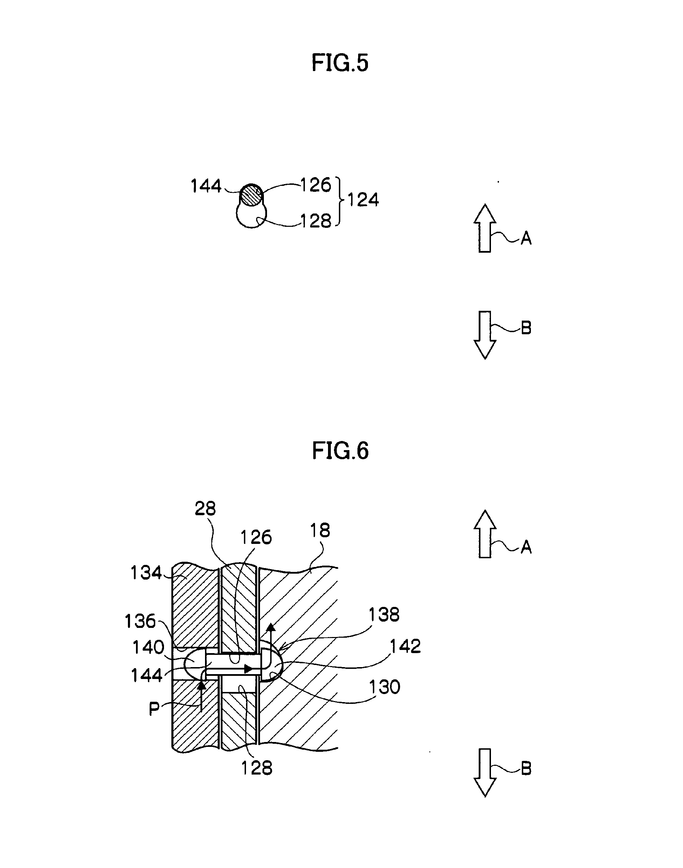

A substantially keyhole-shaped slide pin retention hole 124 that penetrates the lock gear 28 along its axial direction is formed in the lock gear 28. The keyhole-shaped slide pin retention hole 124 is provided further toward inner diameter side of the lock gear 28 with respect to the shear pin insertion hole 120. As shown in FIG. 5, the slide pin retention hole 124 includes a substantially circular small-diameter hole portion 126 and a substantially circular large-diameter hole portion 128 that is continuous with the small-diameter hole portion 126. The small-diameter hole portion 126 and the large-diameter hole portion 128 are lined up along the circumferential direction of the lock gear 28, with the large-diameter hole portion 126 being disposed further in the pullout direction with respect to the small-diameter hole portion 126. In a state where the shear pin 122 has been inserted into the shear pin insertion hole 120 in the lock gear 28, the small-diameter hole portion 126 is disposed facing a circular slide pin housing hole 130 formed in the one end portion of the spool 18. The inner peripheral portion of the slide pin housing hole 130 is formed in a spherical shape.

A circular sleeve housing hole 132 that opens to the one side of the lock gear 28 is formed in the center portion of the lock gear 28 (see FIG. 3), and a sleeve 134 formed in a discoid shape serving as a rotating member that configures part of a later-described pretensioner mechanism 56 is housed inside the sleeve housing hole 132. The sleeve 134 is rotatably supported on one end portion of the torsion deformation portion 23. A circular knurl hole 32 that opens to the one side of the sleeve 134 is formed in the center portion of the sleeve 134, and a knurl surface 34 is formed on the entire inner peripheral surface of the knurl hole 32 as a result of the entire inner peripheral surface of the knurl hole 32 being knurled.

A slide pin insertion hole 136 that penetrates the sleeve 134 along its axial direction is formed in the outer peripheral portion of the sleeve 134. The slide pin insertion hole 136 is disposed facing the small-diameter hole portion 126 of the slide pin retention hole 124.

Here, as shown in FIG. 6, a slide pin 138 formed in a substantially circular column shape serving as a coupling member that configures part of the later-described pretensioner mechanism 56 is housed inside the slide pin insertion hole 136, the slide pin retention hole 124, and the slide pin housing hole 130. The slide pin 138 has a stepped shape where large-diameter portions 140 and 142 are formed at both axial-direction end portions and where a small-diameter portion 144 is formed at an axial-direction intermediate portion. The large-diameter portion 140 is disposed inside the slide pin insertion hole 136, the small-diameter portion 144 is disposed inside the small-diameter hole portion 126 of the slide pin retention hole 124, and the large-diameter portion 142 is disposed inside the slide pin housing hole 130.

The outer diameter dimensions of the large-diameter portions 140 and 142 are formed larger than the inner diameter dimension of the small-diameter hole portion 126 and smaller than the inner diameter dimension of the large-diameter hole portion 128. Displacement of the slide pin 138 along its axial direction is ordinarily regulated as a result of the large-diameter portion 140 and the large-diameter portion 142 engaging with the hole edge portion of the small-diameter hole portion 126. In this state, the sleeve 134 and the spool 18 are coupled together via the slide pin 138, so that when the sleeve 134 rotates, this rotational force is transmitted to the spool 18 via the slide pin 138 (see arrow P in FIG. 6).

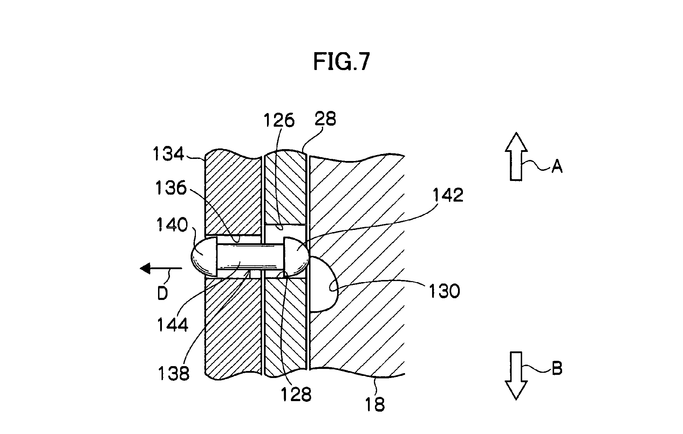

When the spool 18 and the sleeve 134 relatively rotate a predetermined amount in the pullout direction with respect to the lock gear 28 such that the slide pin insertion hole 136 and the slide pin housing hole 130 face the large-diameter hole portion 128 of the slide pin retention hole 124, the above-described regulation of displacement of the slide pin 138 is released and the large-diameter portion 142 is pressed against the inner peripheral surface of the slide pin housing hole 130, whereby the slide pin 138 is displaced away from the spool 18 as shown in FIG. 7 (see arrow D in FIG. 7). Thus, the coupling together of the sleeve 134 and the spool 18 by the slide pin 138 is released.

As shown in FIG. 1, a biasing mechanism 36 is disposed on the other side (in FIG. 2, the right side) of the frame 12. The biasing mechanism 36 includes a spring seat 38, and the spring seat 38 is attached to the outside of the other side wall 12B of the frame 12. The spring seat 38 covers the other side surface of the spool 18 in a state where the screw member 26 protrudes toward the other side. The other side of the spring seat 38 is covered by a spring cover 40, and the spring cover 40 is attached to the outside of the other side wall 12B of the frame 12. A substantially circular column-shaped recessed portion 42 is formed in the spring cover 40, and the recessed portion 42 opens toward the one side.

A spiral spring 44 is disposed inside the recessed portion 42 of the spring cover 40, and an outer side end of the spiral spring 44 is fixed to the inner peripheral surface of the recessed portion 42. An inner side end of the spiral spring 44 is fixed to the screw member 26 such that the spiral spring 44 biases the torsion bar 24, the spool 18, and the lock gear 28 in the take-up direction via the screw member 26.

A lock member 46 that configures part of a later-described lock mechanism 82 is disposed between, so as to bridge, the one side wall 12A and the other side wall 12B of the frame 12, and a lock plate 48 is disposed on one end portion (in FIG. 2, the left end portion) of the lock member 46. The lock plate 48 is supported, so as to be freely pivotable, at one end on a lower portion of a gear case 52 described below, and the lock plate 48 is disposed diagonally below the lock gear 28. Lock teeth 50 are formed on the other end of the lock plate 48, and the lock plate 48 is configured to be pivotable between a position where the lock teeth 50 are separated from the ratchet teeth 30 of the lock gear 28 and a position where the lock teeth 50 are meshed with the ratchet teeth 30 of the lock gear 28.

In the state where the lock teeth 50 of the lock plate 48 are meshed with the ratchet teeth 30 of the lock gear 28, rotation of the lock gear 28, the torsion bar 24, and the spool 18 in the pullout direction is inhibited. Moreover, in this locked state, the load acting on the spool 18 from the webbing 20 is transmitted to the frame 12 via the torsion bar 24, the lock gear 28, and the lock plate 28 (the lock member 46). That is, in this locked state, the load acting on the spool 18 is supported by the frame 12. It will be noted that the lock plate 48 is ordinarily disposed in the position where the lock teeth 50 are separated from the ratchet teeth 30 of the lock gear 28.

The gear case 52 is disposed on the outside of the one side wall 12A of the frame 12, and the gear case 52 covers the one side of the lock gear 28. A circular hole 54 is formed in the center portion of the gear case 52, and the circular hole 54 allows the knurl hole 32 in the sleeve 134 to be exposed. The circular hole 54 is formed with a sufficiently larger diameter than the spindle portion 25 of the torsion bar 24, and the spindle portion 25 coaxially penetrates the circular hole 54.

The pretensioner mechanism 56 is disposed on the outside of the one side wall 12A of the frame 12 (opposite the spool 18). As shown in FIG. 3, the pretensioner mechanism 56 includes a pinion 58 that is disposed on the one side of the gear case 52 and configures a rotating member. The pinion 58 is formed by a metal material such as steel and includes a gear portion 60 having pinion teeth formed on peripheral portion thereof.

A circular cylinder-shaped cam portion 62 is coaxially and integrally disposed on the other side of the gear portion 60, and recesses and protrusions are alternately formed on the outer periphery of the cam portion 62. The cam portion 62 is inserted into the knurl hole 32 via the circular hole 54 in the gear case 52 but does not contact the knurl surface 34, and the sleeve 134 is configured to be rotatable independent of the pinion 58. The cam portion 62 corresponds to a later-described clutch plate 64.

A circular cylinder-shaped rotating spindle portion 61 is coaxially and integrally disposed on the one side of the gear portion 60. The rotating spindle portion 61 penetrates a circular hole 81 formed in a later-described cover plate 80 and is locked by a snap ring 83, and the pinion 58 is rotatably supported by the cover plate 80.

A circular hole portion 63 that penetrates the pinion 58 (the gear portion 60, the cam portion 62, and the rotating spindle portion 61) along its axial direction is formed in the axial center portion of the pinion 58, and the spindle portion 25 of the torsion bar 24 coaxially penetrates the hole portion 63.

As shown in FIG. 1, the inner diameter dimension of the hole portion 63 in the pinion 58 is formed sufficiently larger in comparison to the outer diameter dimension of the spindle portion 25 of the torsion bar 24, and an annular gap is formed between the inner peripheral surface of the hole portion 63 and the outer peripheral surface of the spindle portion 25. That is, the spindle portion 25 penetrates, without contacting, the hole portion 63.

As shown in FIG. 3, the pretensioner mechanism 56 includes the clutch plate 64, and the clutch plate 64 is disposed between the gear case 52 and the pinion 58. Plural mesh claws 66 are formed in the center of the clutch plate 64, and the mesh claws 66 protrude toward the other side from the clutch plate 64. The mesh claws 66 fit together with the recessed portions in the cam portion 62; thus, the clutch plate 64 is attached to the pinion 58. The mesh claws 66 are inserted together with the cam portion 62 into the knurl hole 32 via the circular hole 54 in the gear case 54 but do not contact the knurl surface 34, and the sleeve 134 is configured to be rotatable independent of the clutch plate 64.

As shown in FIG. 1, the pretensioner mechanism 56 includes a drive source 67. The drive source 67 includes a substantially L-shaped circular cylinder 68, and the cylinder 68 is fixed to the outside of the one side wall 12A of the frame 12 below the pinion 58. At the lower side end of the cylinder 68, a gas generator 70 is disposed and a bottomed circular cylinder-shaped generator cap 72 is fixed, and the gas generator 70 closes off the lower side end of the cylinder 68 in a state where it is covered by the generator cap 72.

The drive source 67 includes a piston 74, and the piston 74 is inserted into the cylinder 68 from the upper end of the cylinder 68. An O ring 76 is disposed on the lower end of the piston 74, and the O ring 76 seals the space between the lower end of the piston 74 and the cylinder 68. Moreover, a rack 78 is formed on the piston 74 at a site other than at the lower end.

Moreover, the pretensioner mechanism 56 includes the cover plate 80, which is formed in a substantially triangular column container shape by a metal material, and the cover plate 80 is fixed by plural screws 79 to the outside of the one side wall 12A. As mentioned previously, the pinion 58 is rotatably supported in the circular hole 81 in the cover plate 80, and the spindle portion 25 penetrating the hole portion 63 in the pinion 58 protrudes toward the one side of the cover plate 80. The other side surface and the lower surface of the cover plate 80 are open, and the cover plate 80 houses inside the pinion 58, the clutch plate 64, and the upper portion of the piston 74, and sandwiches the gear case 52 between itself and the one side wall 12A.

The lock mechanism 82 is disposed on the one side (opposite the frame 12 with respect to the cover plate 80) of the pretensioner mechanism 56 (the cover plate 80). The lock mechanism 82 includes a box-like sensor holder 84 whose other side is open. The sensor holder 84 is formed by a resin material, and plural unillustrated lock claws formed on the outer peripheral portion of the open side of the sensor holder 84 fit and lock together with unillustrated lock protrusions and lock protrusions 93 formed on the outer peripheral portion of the one side wall 12A, whereby the sensor holder 84 is attached to the one side wall 12A opposite the spool 18 in a state where the sensor holder 84 does not contact the cover plate 80.

As shown in FIG. 1, a circular bearing hole 85 is formed in the bottom wall of the sensor holder 84, and the one end portion of the spindle portion 25 (the one end portion of the torsion bar 24) that penetrates, without contacting, the hole portion 63 in the pinion 58 is supported, so as to be freely rotatable, by the bearing hole 85. That is, the one end portion of the torsion bar 24 is supported independent of the pinion 58.

The one side of the sensor holder 84 is covered by a box-like sensor cover 86 whose other side is open, and the sensor cover 86 is fixed to the sensor holder 84 and the one side wall 12A of the frame 12.

An acceleration sensor 88 is retained in the lower portion of the sensor holder 84, and the acceleration sensor 88 is disposed in the space between the sensor holder 84 and the sensor cover 86. The acceleration sensor 88 includes a mount 90. A substantially inverted cone-shaped concave portion is formed in the upper surface of the mount 90, and a sphere 92 is mounted in the concave portion of the mount 90. A movable claw 94 is supported, so as to be freely pivotable, above the sphere 92, and the movable claw 94 is placed on top of the sphere 92.

A V gear 96 is disposed in the space between the sensor holder 84 and the sensor cover 86, and the V gear 96 is integrally coupled to the one end portion of the spindle portion 25 and rotates integrally with the torsion bar 24.
Ratchet teeth 98 are formed on the outer periphery of the V gear 96.

A rotation sensor 99 is disposed on the one side of the V gear 96 in the space between the sensor holder 84 and the sensor cover 86. The rotation sensor 99 includes a W pawl 100 rotatably supported on the V gear 96, and a W mass 102 is fixed to the W pawl 100. A sensor spring 104 is disposed between, so as to bridge, the V gear 96 and the W pawl 100, and the sensor spring 104 biases the V gear 96 in the take-up direction with respect to the W pawl 100.

A substantially discoid gear sensor 106 is disposed on the one side of the rotation sensor 99 in the space between the sensor holder 84 and the sensor cover 86, and the gear sensor 106 is rotatably supported on the one end portion of the spindle portion 25. A coil spring 108 is disposed between, so as to bridge, the gear sensor 106 and the inner surface of the sensor cover 86, and the coil spring 108 biases the gear sensor 106 in the take-up direction.

An engagement claw 110 is rotatably provided at the one side on the lower portion of the gear sensor 106. The axis of the center of rotation of the engagement claw 110 is parallel to the axial direction of the torsion bar 24, and the engagement pawl 110 is configured to be meshable with the ratchet teeth 98 of the V gear 96. A push piece 112 is formed at the other side on the lower portion of the gear sensor 106.

Next, the action of the present exemplary embodiment will be described.

In the webbing take-up device 10 of the above-described configuration, the spiral spring 44 of the biasing mechanism 36 biases the torsion bar 24, the spool 18, and the lock gear 28 in the take-up direction via the screw member 26, whereby the webbing 20 is biased in the direction in which it is taken up onto the spool 18.

The acceleration sensor 88 of the lock mechanism 82 detects that the acceleration of the vehicle (the moving acceleration of the spool 18) is equal to or greater than a predetermined acceleration. When the acceleration of the vehicle is equal to or greater than the predetermined acceleration (e.g., when the vehicle suddenly decelerates), the sphere 92 of the acceleration sensor 88 moves and rises in the concave portion of the mount 90 in the direction opposite to the acceleration direction and pushes up the movable claw 94. Thus, the movable claw 94 causes the engagement claw 110 of the gear sensor 106 to rotate and mesh with the ratchet teeth 98 of the V gear 96, whereby the gear sensor 106 becomes coupled to the V gear 96.

The rotation sensor 99 of the lock mechanism 82 detects that the pullout acceleration of the webbing 20 (the rotational acceleration of the spool 18 in the pullout direction) is equal to or greater than a specific acceleration. When the pullout acceleration of the webbing 20 is equal to or greater than the specific acceleration, the rotation of the W pawl 100 and the W mass 102 of the rotation sensor 99 in the pullout direction is suppressed by inertia with respect to the V gear 96 that is rotated in the pullout direction via the spool 18 and the torsion bar 24, whereby the W pawl 100 and the W mass 102 are pivoted with respect to the V gear 96. Thus, the W pawl 100 causes the engagement claw 110 of the gear sensor 106 to rotate and mesh with the ratchet teeth 98 of the V gear 96, whereby the gear sensor 106 becomes coupled to the V gear 96.

When the gear sensor 106 becomes coupled to the V gear 96 as described above, the V gear 96 and the gear sensor 106 are rotated somewhat in the pullout direction via the spool 18 and the torsion bar 24 by the pullout load on the webbing 20 from the passenger. In this case, the rotational force of the V gear 96 and the gear sensor 106 is reduced by the biasing force of the sensor spring 104 that has increased due to the inertia of the W pawl 100 and the W mass 102.

When the gear sensor 106 is rotated somewhat in the pullout direction in this manner, the push piece 112 of the gear sensor 106 causes the lock plate 48 of the lock member 46 to pivot toward the lock gear 28. The pullout load is imparted to the webbing 20 from the passenger and rotational force is imparted in the pullout direction to the spool 18, the torsion bar 24, and the lock gear 28, whereby the lock teeth 50 of the lock plate 48 mesh with the ratchet teeth 30 of the lock gear 28 and rotation of the lock gear 28 in the pullout direction is inhibited. For this reason, rotation in the pullout direction of the spool 18 coupled to the lock gear 28 by the shear pin 122 and the torsion bar 24 is inhibited and the pulling-out of the webbing 20 is inhibited.

Further, when the vehicle experiences an emergency (e.g., an occasion such as when the vehicle suddenly decelerates), the gas generator 70 of the pretensioner mechanism 56 generates gas, whereby the piston 74 is caused to rise inside the cylinder 68 together with the O ring 76, the rack 78 of the piston 74 meshes with the gear portion 60 of the pinion 58, and the pinion 58 is rotated in the take-up direction. For this reason, the pinion 58 is relatively rotated with respect to the clutch plate 64, and the mesh claws 66 of the clutch plate 64 are fitted together with the convex portions on the cam portion 62 of the pinion 58, whereby the mesh claws 66 of the clutch plate 64 are moved outward in the radial direction of the clutch plate 64 and mesh with the knurl surface 34 of the sleeve 134 (the pinion 58 and the sleeve 134 become coupled together). Thus, the sleeve 134 is rotated in the take-up direction integrally with the clutch plate 64 and the pinion 58.

The rotational force of the sleeve 134 in the take-up direction is transmitted to the spool 18 and the lock gear 28 via the slide pin 138, and the spool 18 and the lock gear 128 are rotated in the take-up direction. Thus, the webbing 20 is taken up onto the spool 18, slight looseness (slack) of the webbing 20 in the worn state is eliminated, and the force with which the webbing 20 restrains the passenger rises.

Moreover, when a load equal to or greater than a predetermined value acts on the spool 18 from the passenger via the webbing 20 when the pretensioner mechanism 56 is actuated in a state where the pulling-out of the webbing is inhibited as mentioned previously, that is, in a state where rotation of the lock gear 28 in the pullout direction is inhibited by the lock member 46, the torsion deformation portion 23 of the torsion bar 24 is torsionally deformed, the shear pin 122 breaks, and the spool 18 relatively rotates in the pullout direction with respect to the lock gear 28. Then, when the slide pin insertion hole 136 and the slide pin housing hole 130 face the large-diameter hole portion 128 of the slide pin retention hole 124, the regulation of displacement of the slide pin 138 by the slide pin retention hole 124 in the lock gear 28 is released. Then, the large-diameter portion 142 is pressed with the inner peripheral surface of the slide pin housing hole 130, whereby the slide pin 138 is displaced toward the side opposite the spool 18, and the coupling together of the sleeve 134 and the spool 18 by the slide pin 138 is released. For this reason, the spool 18 is rotated in the pullout direction independent of the lock gear 28 and the sleeve 134 when the torsion deformation portion 23 of the torsion bar 24 is torsionally deformed. Thus, the webbing 20 is pulled out and the load (energy) acting on the passenger from the webbing 20 is absorbed.

The webbing take-up device 10 pertaining to the first exemplary embodiment of the present invention has a configuration where the pretensioner mechanism 56 and the lock mechanism 82 are disposed on one axial-direction end side of the spool 18 but, as mentioned previously, because the rotational force of the sleeve 134 of the pretensioner mechanism 56 is directly transmitted to the spool 18 via the slide pin 138 (i.e., is transmitted to the spool 18 not via the torsion bar 24), the deformation load of the torsion bar 24 may be set regardless of the take-up load of the webbing 20 by the pretensioner mechanism 56.

It will be noted that, in the webbing take-up device 10 pertaining to the above-described first exemplary embodiment, although a case was described where there was just one slide pin 138, the invention is not limited to this and may also have a configuration where the sleeve 134 and the spool 18 are coupled together by plural slide pins 138.

### Second Exemplary Embodiment

Next, a second exemplary embodiment of the present invention will be described. Reference numerals that are the same as those in the preceding first exemplary embodiment will be given to members that are basically the same as those in the preceding first exemplary embodiment, and description of the configurations and action thereof will be omitted.

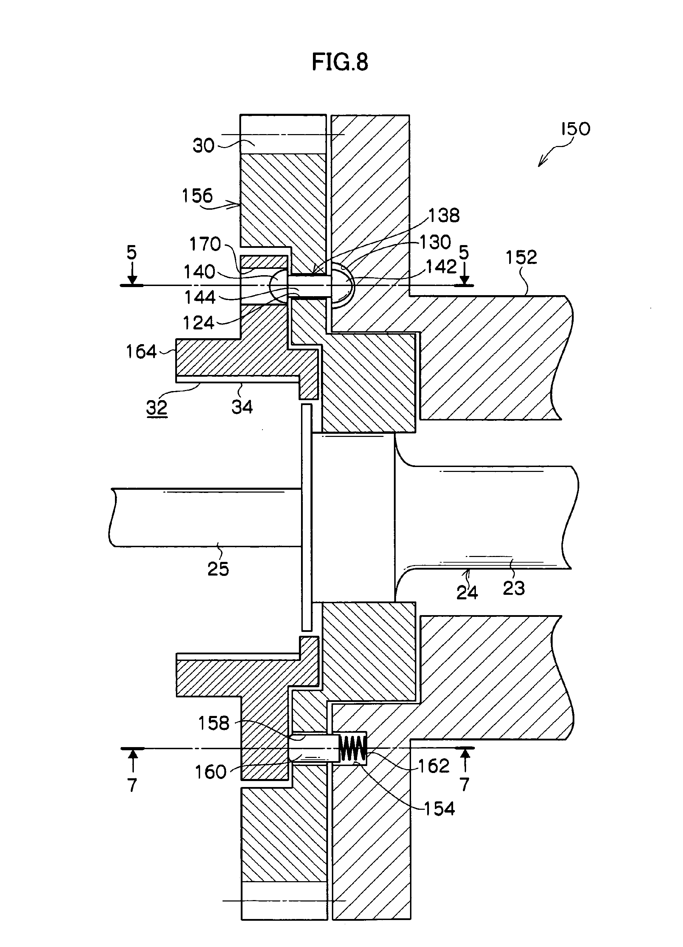

In FIG. 8, a partial configuration of a webbing take-up device 150 pertaining to the second exemplary embodiment of the present invention is shown in a cross-sectional view.

The webbing take-up device 150 basically has the same configuration as that of the webbing take-up device 10 pertaining to the preceding first exemplary embodiment, but is different in the following respects.

A spool 152 of the webbing take-up device 150 basically has the same configuration as that of the spool 18 pertaining to the preceding first exemplary embodiment, but the shear pin 122 is omitted. Further, a circular second slide pin disposition hole 154 that opens to the one side is formed in the one axial-direction end portion of the spool 152.

A lock gear 156 of the webbing take-up device 150 basically has the same configuration as that of the lock gear 28 pertaining to the preceding first exemplary embodiment, but the shear pin insertion hole 120 is omitted. Further, a circular first insertion hole 158 that penetrates the lock gear 156 in its axial direction is formed in the lock gear 156. The first insertion hole 158 faces the second slide pin disposition hole 154 in the spool 152, and a second slide pin 160 serving as a relative rotation regulating member that is formed in a circular column shape is housed inside the second slide pin disposition hole 154 and the first insertion hole 158. In the present exemplary embodiment, the second slide pin 160 serves as a first rotational force transmitting member. A torsion coil spring 162 is housed between the second slide pin 160 and the bottom portion of the second slide pin disposition hole 154. The torsion coil spring 162 biases the second slide pin 160 toward the one side (side opposite the spool 152), and displacement of the second slide pin 160 toward the one side is regulated as a result of the second slide pin 160 abutting against a sleeve 164. The second slide pin 160 couples together the lock gear 156 and the spool 152 and enables transmission of rotational force between both.

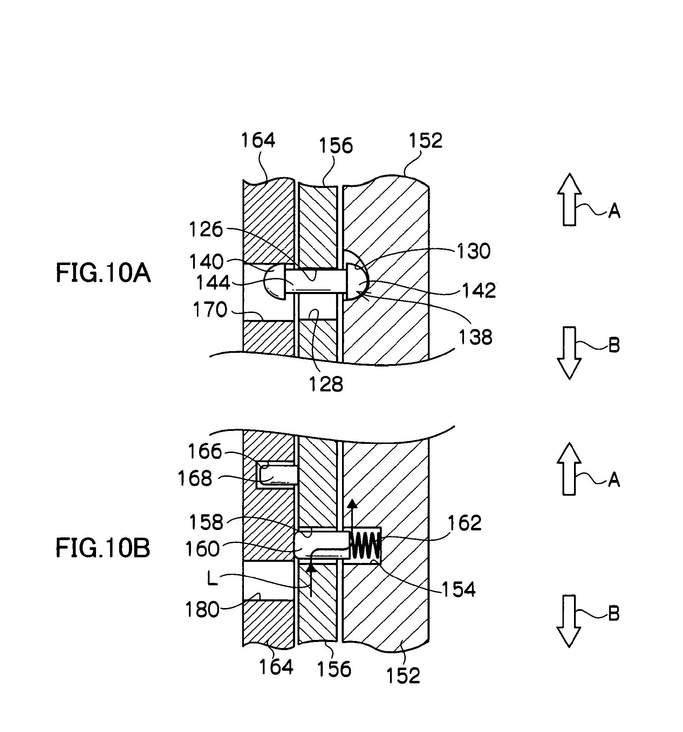

The sleeve 164 basically has the same configuration as that of the sleeve 134 pertaining to the preceding first exemplary embodiment, but a slide pin insertion hole 170 formed in the outer peripheral portion of the sleeve 164 is shaped as a long hole whose longitudinal direction is along the circumferential direction of the sleeve 164, as shown in FIG. 10. A predetermined space is disposed between the end portion at the pullout direction side of the slide pin insertion hole 170 and the slide pin 138. In the present exemplary embodiment, the slide pin 138 serves as a second rotational force transmitting member.

As shown in FIG. 10B, a circular shear pin insertion hole 166 is formed in the end surface at the other side (lock gear 156 side) of the sleeve 164, and a shear pin 168 serving as a breaking portion that protrudes from the end surface at the one side (sleeve 164 side) of the lock gear 156 is housed in the shear pin insertion hole 166. The shear pin 168 couples together the sleeve 164 and the lock gear 156 and regulates the relative rotation of both, but when the pretensioner mechanism 56 is actuated, that is, when the sleeve 164 is rotated in the take-up direction by the drive source 67, the shear pin 168 breaks and releases the coupling together of the sleeve 164 and the lock gear 156.

Moreover, a circular second insertion hole 180 that penetrates the sleeve 164 in its axial direction is formed in the outer peripheral portion of the sleeve 164. As shown in FIG. 10B, the second insertion hole 180 is disposed a predetermined amount in the pullout direction side with respect to the first insertion hole 158 in the lock gear 156.

Next, the action of the second exemplary embodiment will be described.

In the webbing take-up device 150 of the above-described configuration, the spool 152 and the lock gear 156 are coupled together by the second slide pin 160, so that when the rotation of the lock gear 156 in the pullout direction is inhibited by the lock member 46 of the lock mechanism 82, the load acting on the spool 152 is transmitted to the lock gear 156 via the second slide pin 160 (arrow L in FIG. 10B), and the rotation of the spool 152 in the pullout direction is inhibited.

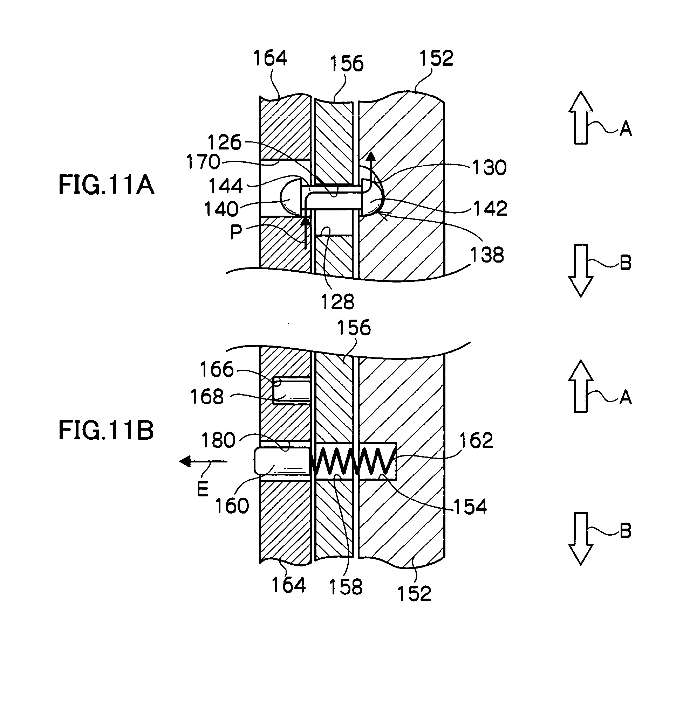

When the vehicle experiences an emergency (e.g., an occasion such as when the vehicle suddenly decelerates), when the sleeve 164 is rotated in the take-up direction by the drive source 67 of the pretensioner mechanism 56, the shear pin 168 breaks as shown in FIG. 11A and the sleeve 164 relatively rotates with respect to the lock gear 156. Then, when the end portion at the pullout direction side of the slide pin insertion hole 170 abuts against the large-diameter portion 140 of the slide pin 138, the sleeve 164 and the spool 152 become coupled together via the slide pin 138, and the rotational force of the sleeve 164 is transmitted to the spool 152 via the slide pin 13 8 (arrow P in FIG. 11A). Thus, the spool 152 is rotated in the take-up direction, and the webbing 20 is taken up onto the spool 152.

Further, at this time, the sleeve 164 relatively rotates a predetermined amount in the take-up direction with respect to the lock gear 156, whereby the second insertion hole 180 in the sleeve 164 and the first insertion hole 158 in the lock gear 156 face each other as shown in FIG. 11B, and the retention of the second slide pin 160 by the sleeve 164 is released. For this reason, the second slide pin 160 is ejected toward the one side of the sleeve 164 by the biasing force of the torsion coil spring 162 (arrow E in FIG. 11B), and the coupling together of the lock gear 156 and the spool 152 by the second slide pin 160 is released.

Moreover, when a load equal to or greater than a predetermined value acts on the spool 152 from the passenger via the webbing 20 when the pretensioner mechanism 56 is actuated in a state where the pulling-out of the webbing is inhibited as mentioned previously, that is, in a state where rotation of the lock gear 156 in the pullout direction is inhibited by the lock member 46, the torsion deformation portion 23 of the torsion bar 24 is torsionally deformed and the spool 152 relatively rotates in the pullout direction with respect to the lock gear 156. Thus, similar to the webbing take-up device 10 pertaining to the preceding first exemplary embodiment, the regulation of displacement of the slide pin 138 by the slide pin retention hole 124 in the lock gear 156 is released, the slide pin 138 is displaced toward the one side of the spool 152, and the coupling together of the sleeve 164 and the spool 152 by the slide pin 138 is released. For this reason, the torsion deformation portion 23 of the torsion bar 24 is torsionally deformed, whereby the spool 152 is rotated in the pullout direction independent of the lock gear 156 and the sleeve 164. Thus, the webbing 20 is pulled out and the load (energy) acting on the passenger from the webbing 20 is absorbed.

As described above, the webbing take-up device 150 pertaining to the second exemplary embodiment of the present invention also provides action and effects that are basically the same as those of the webbing take-up device 10 pertaining to the preceding first exemplary embodiment. That is, during initial actuation of the pretensioner mechanism, the pulling-out of the webbing is inhibited by the slide pin 138 and the second slide pin 160. Further, because the sleeve 164 and the spool 152 are coupled together by the slide pin 138 and the second slide pin 160, the rotational force of the sleeve 164 is directly transmitted to the spool 152 via the slide pin 138 and the second slide pin 160 (i.e., is transmitted to the spool 18 not via the torsion bar 24). Thus, the deformation load of the torsion bar 24 may be set to a desired value regardless of the take-up load of the webbing 20 by the pretensioner mechanism 56.

In the webbing take-up devices pertaining to the preceding first exemplary embodiment and second exemplary embodiment, the pretensioner mechanism was configured such that it was coupled to the spool by the slide pin disposed between, so as to bridge, the sleeve and the spool, but the pretensioner mechanism is not limited to this and may also be configured such that it is coupled to the spool at least when it is actuated.
The features disclosed in the foregoing description, in the claims and/or in the accompanying drawings may, both separately and in any combination thereof, be material for realising the invention in diverse forms thereof.

## Claims

1. A webbing take-up device comprising:
a spool that includes an outer peripheral portion onto which a webbing for restraining a passenger is taken up;
a torsionally deformable energy absorbing member that is housed inside the spool, with one end portion of the energy absorbing member being disposed on one end side of the spool and another end portion of the energy absorbing member being coupled to the other end side of the spool;
a lock mechanism that is disposed on the one end side of the spool and inhibits rotation of the one end portion of the energy absorbing member in a webbing pullout direction when actuated; and
a pretensioner mechanism that comprises
a rotating member rotatably supported on the one end portion of the energy absorbing member,
a drive source capable of rotating the rotating member in a webbing take-up direction, and
a coupling member that couples together the rotating member and the spool at least when the rotating member rotates in the webbing take-up direction and which releases the coupling together of the rotating member and the spool when the energy absorbing member is torsionally deformed.

2. The webbing take-up device of claim 1, wherein the coupling member is disposed between, so as to bridge, the rotating member and the spool and is displaced by relative rotation between the spool and the one end portion of the energy absorbing member.

3. The webbing take-up device of claims 1 or 2, wherein at least one of the spool or the energy absorbing member includes a breaking portion that is disposed between, so as to bridge, the spool and the one end portion of the energy absorbing member to couple together the spool and the one end portion of the energy absorbing member, and is broken when the energy absorbing member is torsionally deformed.

4. The webbing take-up device of claims 1 or 2, further comprising a relative rotation regulating member that is disposed between, so as to bridge, the spool and the one end portion of the energy absorbing member to couple together the spool and the one end portion of the energy absorbing member, and is displaced by relative rotation between the rotating member and the one end portion of the energy absorbing member to release the coupling together of the spool and the one end portion of the energy absorbing member, wherein the coupling member couples together the rotating member and the spool when the rotating member and the one end portion of the energy absorbing member relatively rotate.

5. The webbing take-up device of claim 4, wherein at least one of the rotating member or the energy absorbing member includes a breaking portion that is disposed between, so as to bridge, the rotating member and the one end portion of the energy absorbing member to couple together the rotating member and the one end portion of the energy absorbing member, and is broken when the rotating member rotates.

6. The webbing take-up device of claim 2, wherein relative rotation between the spool and the one end portion of the energy absorbing member occurs by torsional deformation of the energy absorbing member.
